Europäisches Patentamt

European Patent Office

Office européen des brevets

(11) Veröffentlichungsnummer: **0 271 434 B1**

## EUROPÄISCHE PATENTSCHRIFT

(12)

(45) Veröffentlichungstag der Patentschrift: **29.04.92**

(21) Anmeldenummer: **87730162.2**

(22) Anmeldetag: **07.12.87**

(51) Int. Cl.5: **F24H 1/44**, F24H 1/28, F24H 9/00

---

(54) **Stahlheizkessel.**

---

(30) Priorität: **06.12.86 DE 3641981**

(43) Veröffentlichungstag der Anmeldung:
**15.06.88 Patentblatt 88/24**

(45) Bekanntmachung des Hinweises auf die
Patenterteilung:
**29.04.92 Patentblatt 92/18**

(84) Benannte Vertragsstaaten:
**AT BE CH DE ES FR GB GR IT LI LU NL SE**

(56) Entgegenhaltungen:
**DE-B- 2 039 618
DE-U- 7 014 691
DE-U- 8 324 969
FR-A- 2 472 725
FR-A- 2 557 677**

(73) Patentinhaber: **Joh. Vaillant GmbH u. Co.
Berghauser Strasse 40 Postfach 10 10 61
W-5630 Remscheid(DE)**

(84) Benannte Vertragsstaaten:
**DE ES GR IT LU SE**

(73) Patentinhaber: **n.v. Vaillant s.a.
rue Golden Hopestraat 15**

**B-1620 Drogenbos(BE)**

(84) Benannte Vertragsstaaten:
**BE**

(73) Patentinhaber: **VAILLANT S.A.R.L
4, Rue des Oliviers Orly-Sénia 326
F-94537 Rungis Cedex(FR)**

(84) Benannte Vertragsstaaten:
**FR**

(73) Patentinhaber: **VAILLANT Ges.m.b.H
Forchheimergasse 7 Postfach 56
A-1233 Wien(AT)**

(84) Benannte Vertragsstaaten:
**AT**

(73) Patentinhaber: **Vaillant Ltd.
Vaillant House Medway City Estate Trident
Close
Rochester Kent ME2 4EZ(GB)**

(84) Benannte Vertragsstaaten:
**GB**

---

(73) Patentinhaber: **Vaillant-Schonewelle B.V.**
**Paasheuvelweg 42 Postbus 23250**
**NL-1100 DT Amsterdam(NL)**

(84) Benannte Vertragsstaaten:
**NL**

(73) Patentinhaber: **Vaillant GmbH**
**Riedstrasse 8**
**CH-8953 Dietikon 1(CH)**

(84) Benannte Vertragsstaaten:
**CH LI**

(72) Erfinder: **Henche, Wolfgang**
**Poststrasse 1**
**W-5630 Remscheid 11(DE)**
Erfinder: **Pelzer, Kurt**
**Am Stockbergerbusch 7**
**W-5067 Kürten Weiden(DE)**
Erfinder: **Reichmann, Horst**
**Wormser Strasse 23**
**W-5600 Wuppertal 1(DE)**
Erfinder: **Uckelmann, Winfried**
**Schillerstrasse 18**
**W-5632 Wermelskirchen(DE)**

(74) Vertreter: **Heim, Johann-Ludwig, Dipl.-Ing.**
**c/o Joh. Vaillant GmbH u. Co Berghauser**
**Strasse 40 Postfach 10 10 20**
**W-5630 Remscheid 1(DE)**

**Beschreibung**

Die Erfindung bezieht sich auf einen Stahlheizkessel mit einem in einer Brennkammer angeordneten Sturzbrenner sowie einem darunter angeordneten heizwasserdurchströmten, mit einem Vorlaufanschluß im oberen Bereich und einem Rücklaufanschluß im unteren Bereich versehenen Wärmetauscher, der von etwa senkrechten Abgaskanälen sowie in verschiedenen Ebenen übereinander verlaufenden, durch Platten voneinander getrennten nahezu waagerechten Wasserkanälen derart durchzogen ist, daß er im wesentlichen als Kreuzgegenströmer ausgebildet ist, wobei die Strömungsrichtung des Wassers in den waagerechten Wasserkanälen je Ebene wechselt und der Brennkammerboden den Abschluß des Wärmetauschers nach oben bildet.

Ein solcher Heizkessel ist aus der FR-A-24 72 725 bekanntgeworden. Verbesserungswürdig bei diesem nach dem Kreuzgegenstromprinzip aufgebauten Kessel ist neben dem Wirkungsgrad vor allem die Dampfblasen- beziehungsweise Kondensatabfuhr.

Schließlich zeigt die DE-U-70 14 691 einen Gas-Wärmetauscher, der im Kreuzgegenstromprinzip arbeitet. Dabei ist die der Verbrennungskammer unmittelbar benachbarte Umlenkplatte für die Führung des Heizwasser- beziehungsweise Brauchwasserstromes von der Verbrennungskammer durch einen Abstand getrennt, der erheblich kleiner ist als der Abstand zwischen benachbarten Umlenkplatten. Dadurch wird in diesem Teil des Wärmetauschers die Strömungsgeschwindigkeit des Wassers erhöht, wodurch Dampfblasen mitgerissen und in Richtung auf den Auslaß bewegt werden sollen. Das Wasser strömt quasi sehr schnell an der Verbrennungskammer vorbei, wodurch nicht der optimale Wärmeübergang bewirkt wird.

Der vorliegenden Erfindung liegt die Aufgabe zugrunde, einen Stahlheizkessel der eingangs bezeichneten Gattung als Kondensationskessel mit hohem Wirkungsgrad auszubilden, wobei gleichzeitig eine Verbesserung der Dampfblasen- beziehungsweise Kondensatabfuhr anzustreben ist.

Die Lösung dieser Aufgabe liegt erfindungsgemäß darin, daß die oberste dem Brennkammerboden benachbarte Platte eine Ausnehmung in der Brennerachse aufweist, während die anderen Platten an ihrer Peripherie jeweils zwei einander diametral gegenüberliegende, den Wasserdurchlaß zwischen benachbarten Wasserkanälen bildende vertikal zueinander versetzte Bereiche aufweisen, und daß der Brennkammerboden dachförmig ausgebildet ist, wobei der Dachwinkel zumindest 6° beträgt und die Dachkante die Brennerachse schneidet und die niedrigste Stelle bildet.

Durch die Ausbildung des obersten Bereiches des Wärmetauschers als reiner Gegenströmer wird ein besonders hoher Wirkungsgrad erzielt, das heißt, die Abgase werden besonders weitgehend gekühlt, und das Wasser wird intensiv aufgeheizt, weil stets die maximal mögliche Temperaturdifferenz zwischen dem abzukühlenden Abgas und dem aufzuheizenden Wasser zur Verfügung steht. Dies wird unterstützt durch das aufgrund des Versatzes der Durchlaßbereiche übereinanderliegender Platten von allen Seiten erfolgende Anströmen der Abgaskanäle durch das Wasser, wobei jeder Bereich der Wärmetauschflächen gleich gut angeströmt wird. Das zentrale Anströmen des Brennkammerbodens im obersten Wasserkanal bewirkt gemeinsam mit dem peripheren Abströmen entlang der Dachschrägen eine vorteil hafte Abfuhr etwa gebildeter Dampfblasen. Durch die Dachform wird darüber hinaus das während der Bereitschaft, also in den Betriebspausen, hier anstehende Kondensat besonders gut abgeleitet.

Durch den Verzicht auf waagerechte Strömungskomponenten in dem unmittelbar unterhalb des Brenners gelegenen Bereich wird ein besonders intensiver Wärmetausch an der thermisch höchstbelasteten Stelle des Wärmetauschers erzielt.

Mit Vorteil ist der Wärmetauscher im Bereich der Brennkammer so ausgebildet, daß er den Brenner ringförmig peripher umgibt. Dadurch wird auch die seitwärts abgestrahlte Wärme der Brennerflamme noch zum Wärmetausch genutzt.

Mit weiterem Vorteil ist der Wärmetauscher so ausgestaltet, daß die Abgaskanäle im Wärmetauscher von Vierkant-Rohren gebildet werden, die bevorzugt längs der gesamten Peripherie des Wärmetauschers miteinander verschweißt sind. Hier ist es besonders vorteilhaft, die Schweißung nur an den Enden der Rohre vorzunehmen.

Durch diese Ausgestaltung ist es möglich, die Rohre des Wärmetauschers gewissermaßen nur an ihren Enden und im Bereich der Peripherie zu befestigen, jedoch im übrigen Verlauf bloß wärmeleitend aneinanderliegen zu lassen. Hierdurch ergibt sich ein besonders einfacher Aufbau des Wärmetauschers und eine vereinfachte Fertigung.

Es ist weiterhin zweckmäßig, der Wasserführung dienende Einbauten im Wärmetauscher vorzusehen, die am Rohrbündel des Wärmetauschers befestigt sind. Hierdurch ist es möglich, den Wärmetauscher als Ganzes vorzufertigen und anschließend in den Mantel des Gehäuses einzusetzen, ohne daß es weiterer Montagearbeiten bedarf.

Schließlich ist es zweckmäßig, wenigstens einen Zwischenraum vorzusehen, an den alle Abgaskanäle angeschlossen sind. Durch eine solche Unterteilung der Höhe des Wärmetauschers ergibt sich ein besonders hoher Wirkungsgrad des Kessels.

Weitere Ausgestaltungen und besonders zweckmäßige Weiterbildungen des Erfindungsgegenstandes gehen aus den Unteransprüchen sowie der nachfolgenden Beschreibung hervor, in der mehrere Ausführungsbeispiele des Erfindungsgegenstandes anhand der Zeichnungsfiguren näher erläutert sind.

Im einzelnen zeigen

Figur 1 einen Axialschnitt einer ersten Ausführungsform eines erfindungsgemäßen Kessels, teilweise schaubildlich,

Figur 2 einen Axialschnitt einer zweiten Ausführungsform,

Figur 3 einen Querschnitt durch den Kessel nach Figur 2,

Figur 4 und 5 Details der Rohrbefestigung dieses Kessels schaubildlich,

Figur 6 eine Variante des Wärmetauschers eines solchen Keseels gleichfalls schaubildlich,

Figur 7 einen Horizontalschnitt durch einen solchen Wärmetauscher nach Figur 6,

Figur 8 einen Vertikalschnitt durch eine Hälfte eines solchen Wärmetauschers,

Figur 9 einen Horizontalschnitt durch eine Ausführungsvariante,

Figur 10 gleichfalls einen Horizontalschnitt durch eine weitere Ausführungsform,

Figur 11 einen Vertikalschnitt durch eine Hälfte einer abgewandelten Ausführungsform,

Figur 12 und 13 Axialschnitte durch den Bereich des Brennkammerbodens eines Kessels in zwei Ausführungsvarianten,

Figur 14 einen Axialschnitt einer weiteren Ausführungsform des Kessels schaubildlich und

Figur 15 eine Draufsicht auf die Ausführungsform nach Fig.14.

Der Kessel ist aus verschweißten Stahlblechen hergestellt und hat eine etwa zylindrische Form mit einem Mantel 2, einem Fuß 3, der eine Stirnseite des Zylinders verkörpert, und einer Decke 4, an der ein Sturzgebläsebrenner 5 mit abwärts gerichteter Flamme befestigt ist. Außerhalb des Mantels 2 beziehungsweise der Decke 4 und des Fußes 3 kann noch eine nicht dargestellte Isolierung vorgesehen sein, die ihrerseits von einem zylindrischen oder prismatischen Gehäuse verkleidet sein kann.

Im obersten Bereich des Mantels 2 befindet sich die zylindrische Brennkammer 6, die peripher von einem wasserführenden Ringraum 7 umgeben ist, der sich zwischen dem Mantel 2 und der Innenwand 8 der Brennkammer 6 ergibt und von dessen oberen Bereich ein Vorlaufanschluß 9 ausgeht.

Die Unterseite der Brennkammer 6 ist von einem Brennkammerboden 10 gebildet, der dachförmig gestaltet ist, wobei der First 11 die tiefste Stelle ist.

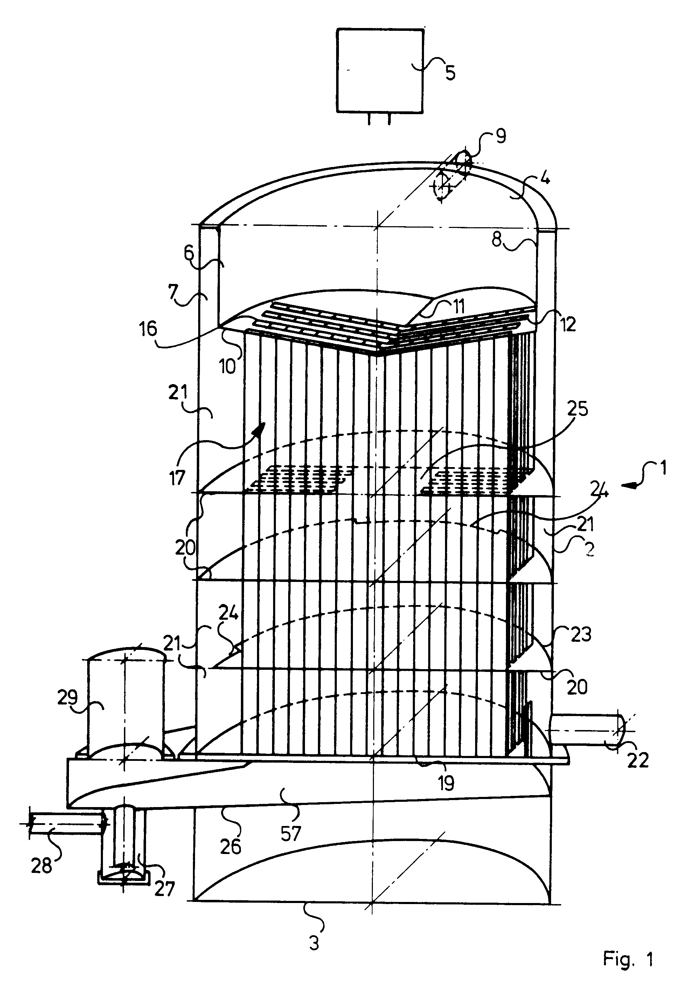

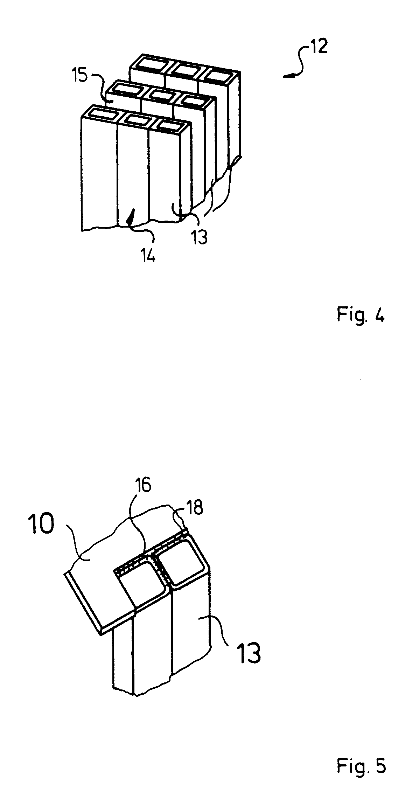

Vom Brennkammerboden 10 abwärts erstreckt sich bei der Ausführungsform nach den Figuren 1 bis 5 ein Rohrbündel 12. bestehend aus dem Wärmetausch dienenden Vierkant-Rohren 13, die das Abgas des Brenners 5 aus der Brennkammer 6 nahezu senkrecht abwärtsleiten. Wie die Figur 4 zeigt, besteht das Rohrbündel 12 aus einzelnen Vierkant-Rohren 13, die vorzugsweise quadratischen Querschnitt besitzen und aus Stahl gefertigt sind. Wie die Figur 4 ferner zeigt, sind diese Vierkant-Rohre 13 miteinander zu Rohrscharen 14 verbunden, indem jeweils benachbarte Außenseiten dieser Rohre 13 unmittelbar miteinander verschweißt sind. Zwischen den Rohrscharen 14 ergeben sich Zwischenräume 15, die die Wasserkanäle für das vom Kessel aufzuheizende Wasser bilden. Figur 5 zeigt, daß die Rohrbündel 12 an der Peripherie 16 des Wärmetauschers 17 miteinander und mit dem Brennkammerboden 10 durch Schweißnähte 18 verbunden sind.

Somit bilden die einzelnen Rohre 13 bzw. die Rohrscharen 14 ein kompaktes Rohrbündel 12, in dem die Rohre 13 nur in ihrem oberen und unteren Endbereich 16 miteinander verschweißt sind. In diesen beiden Endbereichen 16 sind die Rohre 13 auch noch mit dem Brennkammerboden 10, beziehungsweise mit dem unteren Abschlußboden 19 des Wärmetauschers 17 verschweißt.

Wie aus der Figur 1 besonders gut ersichtlich ist, ist die Länge des Rohrbündels 12 durch Platten 20 in Wasserkanäle 21 unterteilt, von denen der unterste an einen Rücklaufanschluß 22 angeschlossen ist. Diese Platten 20 sind kreisförmig gestaltet und mit der Peripherie des Rohrbündels 12 verscheißt. An ihrer Peripherie 23 weisen die Platten 20 Bereiche 24 verringerten Durchmessers auf, die so angeordnet sind, daß sie vertikal gegeneinander versetzt sind, also nicht miteinander fluchten. Je Platte 20 liegen zwei solche Bereiche 24 diametral einander gegenüber, bei zwei einander benachbarten Platten 20 sind die Bereiche 24 um jeweils 90° gegeneinander versetzt.

Somit ergeben die Platten 20 mit dem Rohrbündel 12 einen Kreuzgegenstrom-Wärmetauscher 17, weil der unterste Wasserkanal 21 vom Rücklaufanschluß 22 direkt in einer bestimmten waagerechten Richtung angeströmt wird, anschließend die erste Platte 20 in einem Bereich 24 aufwärts umströmt und somit der nächstobere Wasserkanal 21 in der Gegenrichtung durchströmt wird. Den zweiten Wasserkanal 21 kann das Wasser aufwärts aber nur über die beiden um 90° zu den Bereichen 24 der zweiten Platte 20 versetzten Bereiche 24 der dritten Platte 20 verlassen.

Die dem Brennkammerboden 10 nächstgelegene Platte 20 weist eine zentrale Ausnehmung 25 auf, durch die das aufzuheizende Wasser gegen den First 11 des Brennkammerbodens 10 gerichtet wird.

In dieser letzten Stufe ist der Wärmetauscher 17 somit als reiner Gegenstromwärmetauscher ausgebildet.

Der Brennkammerboden 10 wird radial in Richtung zur Peripherie angeströmt, so daß das Wasser durch den Ringraum 7 in Richtung zum Vorlaufanschluß 9 weiterströmen kann.

Unterhalb des Abschlußbodens 19 des Wärmetauschers 17 verläuft ein Abgassammler 57, der unten durch ein schrägliegendes Sammelblech 26 begrenzt ist. An diesen Abgassammler 57 sind alle Rohre 13 des Wärmetauschers 17 angeschlossen.

Außerhalb des Mantels ist bei der Ausführungsform nach Figur 1 an die tiefste Stelle des schrägverlaufenden Sammelbleches 26 ein Siphon 27 angeschlossen, der mit einem Ablaufstutzen 28 zur Abfuhr des Kondensates versehen ist.

An der Oberseite des Abgassammlers 57 ist ein Abgasabzug 29 vorgesehen. Der Siphon 27 und der Abgasabzug 29 fluchten miteinander und gehen vom Inneren des Abgassammlers 57 ab.

Der Mantel 2 des Kessels 1 erstreckt sich abwärts bis zum Fuß 3 und bildet dort diesen Fuß.

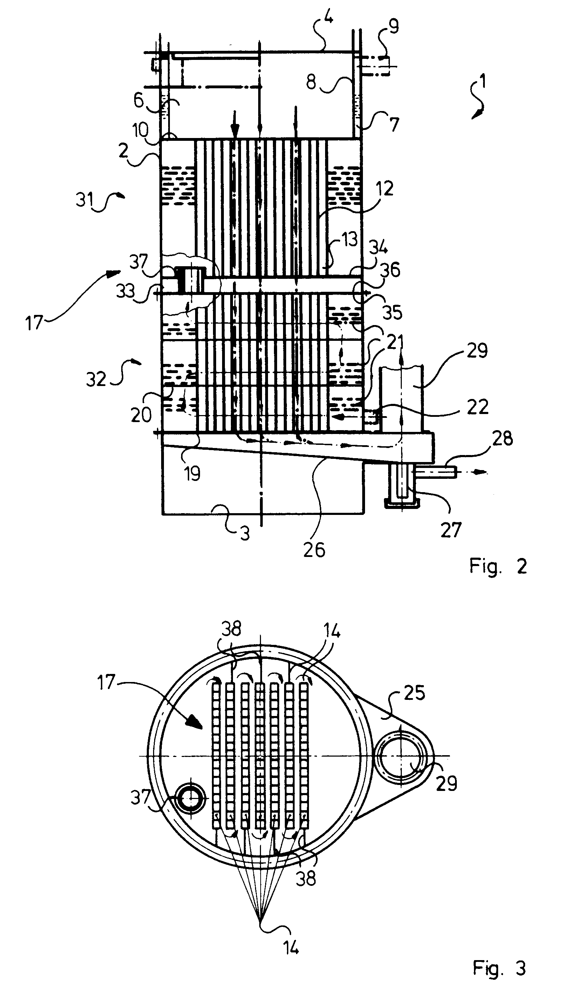

Beim Ausführungsbeispiel nach Figur 2 ist der Wärmetauscher 17 in einen oberen Wärmetauscherbereich 31 und einen unteren Wärmetauscherbereich 32 unterteilt, wobei der letztere der Kondensationsbereich ist. Die beiden Wärmetauscherbereiche 31 und 32 sind durch einen Zwischenraum 33 voneinander getrennt, der sich über den gesamten Innendurchmesser des Mantels 2 erstreckt und durch einen Oberboden 34 und einen Unterboden 35 begrenzt ist, zwischen denen ein zylindrischer Abgasraum 36 gebildet wird. An diesen Abgasraum 36 sind sowohl sämtliche Rohre 13 des oberen Wärmetauscherbereiches 31 als auch jene des unteren Wärmetauscherbereiches 32 angeschlossen. Diesen Abgasraum 36 durchsetzt ein wasserführender Stutzen 37, durch den der oberste Wasserkanal 21 des unteren Wärmetauscherbereiches 32 mit dem untersten Wasserkanal 21 des oberen Wärmetauscherbereiches 31 verbunden ist. Der untere Wärmetauscherbereich 32 ist als Kreuzgegenströmer ausgebildet, wobei hier die Wasserkanäle 21 in benachbarten Höhenbereichen jeweils im Gegenstrom durchströmt werden. Der obere Wärmetauscherbereich 31 ist hingegen als reiner Gegenströmer ohne Wasserumlenkungen ausgebildet.

Die Ausführungsform des Kessels 1 nach Figur 2 ist teuerer in der Herstellung, weil zwei gesonderte Rohrbündel 12 angefertigt werden müssen, erweist sich aber im Wirkungsgrad dem Kessel nach Figur 1 deutlich überlegen.

Wie aus Figur 3 hervorgeht, ist es möglich, die einzelnen Rohrscharen 14 mit je einer seitlich ansetzenden Trennwand 38 auszustatten, damit je Wasserkanal 21 im unteren oder oberen Wärmetauscherbereich 32 bzw. 31 die einzelnen Rohrscharen 14 räumlich getrennt, nacheinander vom Wasser umströmt werden. Dies ist auch bei der Ausführungsform des Kessels 1 nach Figur 1 möglich.

Die Funktion des Stahlheizkessels 1 nach den beiden Ausführungsbeispielen gemäß der Figuren 1 und 2 ist folgende:

Gefördert von einer nicht dargestellten Pumpe strömt Wasser dem Rücklaufanschluß 22 zu und verläßt den Kessel 1 über den Vorlaufanschluß 9. Das Wasser tritt in den untersten Wasserkanal 21 ein, umströmt das Rohrbündel 12 der abgasführenden Rohre 13 und gelangt durch den dem Rücklaufanschluß 22 diametral gegenüberliegenden Bereich 24 verringerten Durchmessers in den nächsthöheren Wasserkanal 21. Auch hier werden die Rohre 13 umströmt und der Wasserstrom teilt sich und strömt nach einer Ablenkung um 90° durch die versetzt angeordneten Bereiche 24 der nächsthöheren Platte 20 in den nächsten Wasserkanal 21. Beim Ausführungsbeispiel nach Figur 1 findet diese Umlenkung einige Male statt, bis die zentrale Ausnehmung 25 erreicht ist und der Brennkammerboden 10 unmittelbar im Gegenstrom zu den Abgasen von unten angeströmt wird.

Das Wasser umspült so den thermisch höchstbelasteten Brennkammerboden 10, der vom Brenner 5 unmittelbar angestrahlt wird. Wasser und eventuell sich bildende Dampfblasen strömen bzw. gleiten an den schrägen Flächen des Brennkammerbodens 10 aufwärts in den Ringraum 7 und verlassen diesen über den Vorlaufanschluß 9. Weil das über den Rücklaufanschluß 22 zuströmende Rücklaufwasser relativ kalt ist, findet, insbesondere in Höhe der tieferen Wasserkanäle 21 eine Kondensation des Abgases innerhalb der Rohre 13 statt. Das Kondensat wird durch das abwärtsströmende Abgas mitgerissen und tropft in den Abgassammler 57 ab. Infolge der Neigung des Sammelbleches 26 gelangt das Kondensat in den Siphon 27 und wird über den Ablaufstutzen 28 abgezogen, gegebenenfalls (insbesondere bei Verwendung eines Ölbrenners) neutralisiert und abgeleitet.

Das Abgas tritt in den Abgasabzug 29 ein und wird mittels des Förderdruckes des Gebläse-Brenners 5 in einen Abgaskamin abgeführt.

Beim Ausführungsbeispiel nach Figur 2 findet mindestens im oberen Wärmetauscherbereich 31 noch eine Umlenkung des Wassers durch die Trennwände 38 statt, um einen noch intensiveren Wärmetausch zu erzielen.

Sowohl die Einzelheiten des Ausführungsbeispieles nach Figur 1 als auch jene des Ausführungsbeispieles nach Figur 2 sind ganz oder teilweise gegeneinander austauschbar.

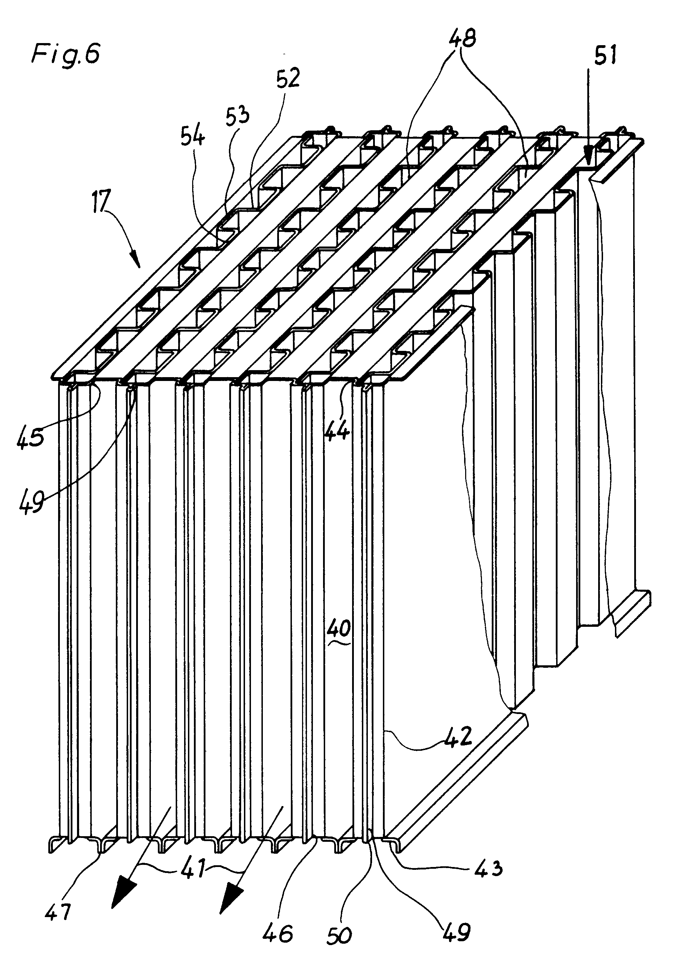

Aus der Figur 6 geht eine andere Möglichkeit des Aufbaues des Wärmetauschers 17 hervor. Dieser Wärmetauscher 17 ist gemäß dieser Ausführungsform nicht aus einem verschweißten Rohrbündel 12 hergestellt, sondern aus geformten Blechen und bildet in den einzelnen Ebenen, die zwischen den Platten 20 verlaufen, Wasserkanäle 15 bzw. 40, die in Richtung der Pfeile 41 vom Wasser durchströmt werden. Die Art der Durchströmung ist dieselbe wie bei den Ausführungsbeispielen nach den Figuren 1 bis 3. In jeder Ebene findet eine Umlenkung um 180° statt, auch die Ausbildung des Wärmetauschers 17 im obersten Bereich ist die gleiche.

Die Wasserkanäle 40 werden von einem Blech 42 gebildet, das in den Kanten 43, 44, 45 und 46 abgekantet wurde, so daß sich die als Wasserkanäle 40 dienenden Hohlräume bilden. Die Ränder des Bleches 42 wurden im Bereich der Schweißnaht 47 miteinander verschweißt, die in jeder Ebene unten verläuft.

In jeder Ebene liegen eine Mehrzahl solcher Wasserkanäle 40 parallel und im Abstand nebeneinander. Die Abstände sind jeweils von Abgaskanälen 48 gebildet, die von den Außenseiten der gleichen Bleche 42 begrenzt und in Pfeilrichtung 51 von den Abgasen durchströmt werden. Um die Abgaskanäle 48 seitlich wasserdicht zu machen, weisen die Bleche 42 Flanschen 49 auf, die nach außen abgekantet sind und längs ihrer gemeinsamen Ränder 50 durch eine Schweißnaht miteinander verbunden sind. Hierdurch sind die Abgaskanäle 48 gegenüber den wasserführenden Räumen abgedichtet.

Der ganze Wärmetauscher 17 ist innerhalb des Mantels 2 des Kessels 1 gelagert. Sämtliche Wasserkanäle 40 stehen über die peripheren Ringräume miteinander in Verbindung. Die in Pfeilrichtung 41 erfolgende Strömung des Wassers wird durch die Platten 20 mit ihren Bereichen 24 verringerten Durchmessers vorgegeben.

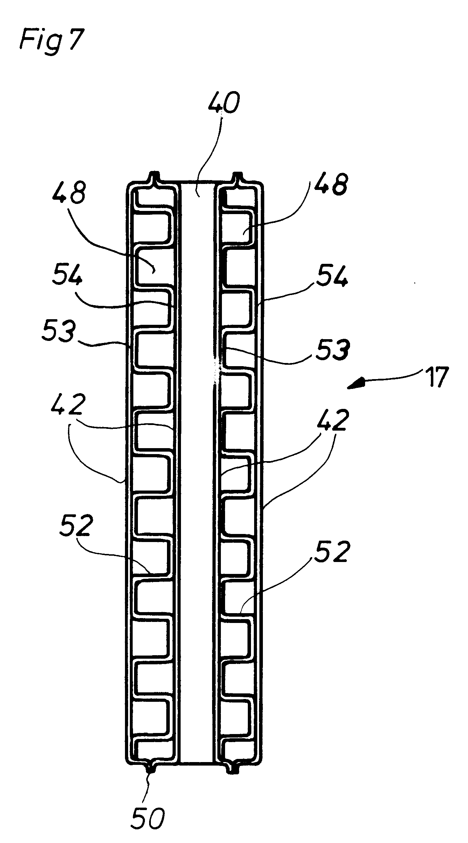

Um den Wärmeübergang zwischen den Abgasen und dem Wasser zu erhöhen, sind inden Abgaskanälen 48 geprägte Bleche 52 eingebaut. Nach dem Ausführungsbeispiel gemäß Figur 6 andelt es sich um wellenförmig geprägte Profile, wobei die Wellen von dem jeweils um 90° abgekanten Blech 52 gebildet sind. Somit ergeben sich Flächenbereiche 53 dieses Bleches, die dem einen der beiden benachbarten Wasserkanäle 21 zugeordnet sind, und Flächenbereiche 54, die dem anderen Wasserkanal 21 zugeordnet sind. Gemäß Figur 7 kann vorgesehen sein, daß solche Flächenbereiche 53 bzw. 54 mit der Wandung 42 jeweils eines Wasserkanales 40 verschweißt sind, an der Wandung des anderen Wasserkanales 40 jedoch nur anliegen.

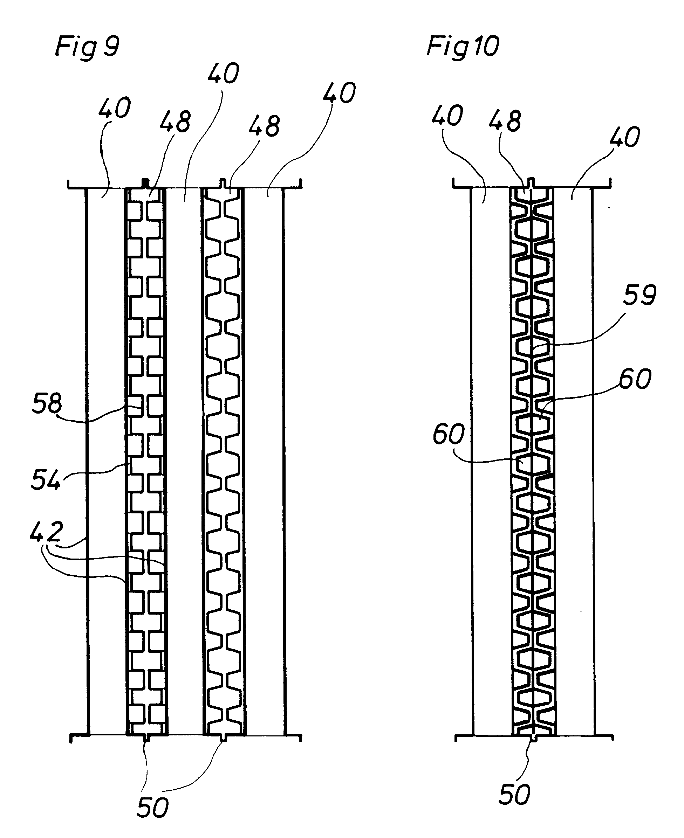

Bei diesem Ausführungsbeispiel ist die Wandung 42 jedes Wasserkanales 40 mit einem der Bleche 52 durch Schweßnähte verbunden. Hierdurch wird erreicht, daß wenigstens jedem Wasserkanal 40 ein durch eine Schweißnaht gut wärmeleitend verbundener Abgaskanal 48 zugeordnet ist. Die Schweißungen müssen nicht wasserdicht sein, sie dienen nur der Verbesserung des Wämeüberganges. Die Blechstege 52 können - gemäß Figur 10 - auch trapezförmige Profile bilden.

In der schaubildlichen Darstellung nach Figur 6 ist ersichtlich, daß die Abgaskanäle 48 immer von oben nach unten, die Wasserkanäle 40 hingegen im unteren Bereich des Wärmetauschers 17 immer waagrecht oder annähernd waagrecht verlaufen.

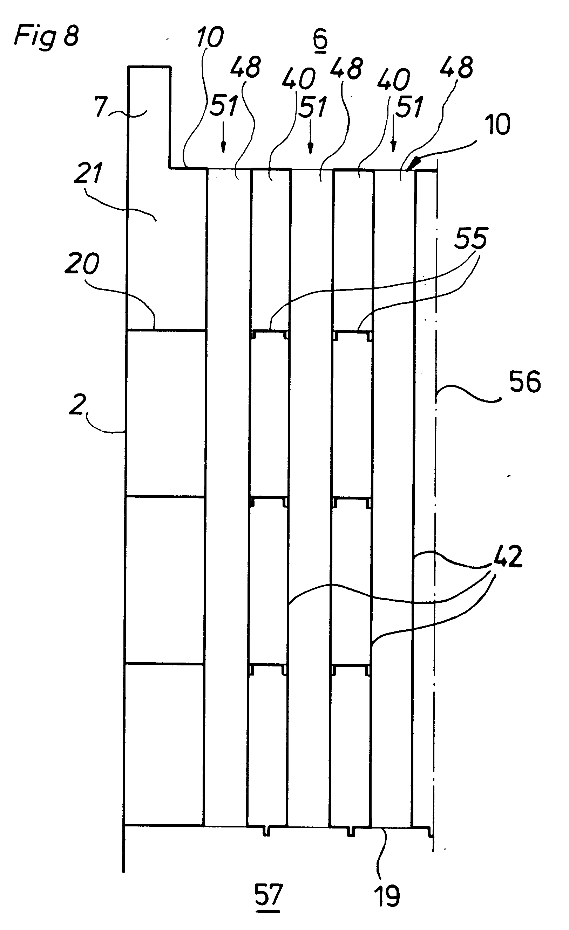

Die Figur 8 zeigt, daß unabhängig von der Ausbildung der Abgaskanäle 48 auch die Wasserkanäle 40 mit Umlenkblechen 55 ausgestattet sein können. Diese Umlenkbleche 55 bewirken eine Unterteilung und sind U-förmig profilierte Bleche, die in die Wasserkanäle 40 seitwärts eingeschoben werden und an ihren Stirnseiten durch je einen Schweißpunkt gehalten sind. Die Umlenkbleche 55 brauchen nicht dicht sein, sie müssen nur für eine Umlenkung des Wassers sorgen.

Die Wasserkanäle 21 zwischen der Innenseite des Mantels 2 und dem am weitesten außenliegenden Abgaskanal 48 sind wieder durch die peripheren Bereiche der Platten 20 unterteilt. Diese Unterteilung ist erforderlich, damit die Anströmung der jeweils nächsten Wasser-Etage um 180° wechseln kann, so daß der Kreuzgegenstrom über den gesamten unteren Bereich des Wärmetauschers aufrechterhalten bleibt.

Die Figur 8 zeigt somit im Grunde den gesamten Wärmetauscher 17, in dem sich eine Vielzahl nebeneinander parallel im Abstand verlaufender Abgaskanäle 48 ergibt, zwischen denen jeweils Wasserkanäle 40 verlaufen, die der Höhe nach durch die Umlenkbleche 55 unterteilt sind; in den einander benachbarten Teilkanälen verläuft die Strömung jeweils gegenläufig.

An die Unterseite des gesamten Wärmetauschers 17 schließt der Abgassammler 57 an, dessen Aufbau dem der Ausführungsform nach Figur 1 entspricht.

Auch gemäß Figur 9 findet die Durchströmung der Wasserkanale 40 in der Waagerechten statt, wogegen die Abgaskanäle 48 lotrecht durchströmt werden. Die Einbauten dieser Abgaskanale 48 sind gegenüber dem Ausführungsbeispiel nach Figur 6 geändert, indem nämlich das Blech 52 geteilt wurde. Diese Teilung in zwei gleiche Bleche 58 bringt den Vorteil, daß die jeweils den Wandungen 42 der Wasserkanäle 40 zugewandten Flächenbereiche 54 mit den Wandungen 42 verschweißt werden können. Die jeweils anderen Flächenbereiche 53 liegen einander nahe gegenüber. Dadurch ist die Wärmeübertragung vom Abgas auf das Wasser verbessert, weil jeweils beide Flächen eines Wasserkanales 40 mit einem Blechstreifen wärmeleitend verbunden sind.

In der rechten Hälfte der Figur 9 ist gezeigt, daß die Blechstege 52 auch eine trapezförmig profilierte Wellung bilden können.

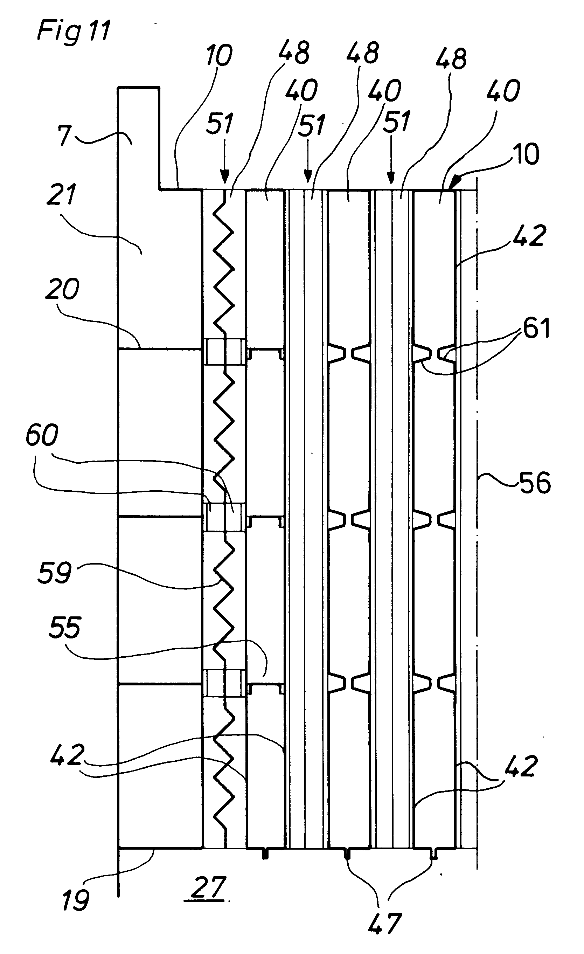

Alternativ kann zu einem einzigen Blech 52 oder zu zwei gleichen Blechen 58 auch ein schwächer profiliertes Blech 59 gemäß Figur 11 verwendet werden, das lotrecht in die Abgaskanäle 48 eingeschoben ist, aber die beiden einander gegenüberstehenden Wandungen 42 der benachbarten Wasserkanäle 40 nicht berührt. Weil diese Wasserkanäle 40 aber unter einem Druck von 3 bar stehen können, besteht die Gefahr, daß sich die Abgaskanäle 48 durch Einbauchungen der Breitseiten der Wandungen 42 verengen. Um deshalb den Soll-Abstand der Wandungen 42 und den Soll-Querschnitt der Abgaskanäle 48 beizubehalten, müssen Abstandhalter vorgesehen werden. Bei geeigneter Formgebung können die Bleche 52 einfach selbst als Abstandhalter dienen, wie dies die Figuren 6,7,9 und 10 zeigen. Bei einem schwächer profilierten Blech 59, wie es die Figur 11 zeigt, müssen jedoch eigene Abstandhalter 60 angeordnet werden, die dann auch dss Blech 59 halten. Das Blech 59 bewirkt eine intensive Abgasanströmung der die Wasserkanäle 40 begrenzenden Wandungen 42 durch einen Turbulenzeffekt.

Wie der rechte Teil der Figur 11 zeigt, können auch die Einbauten der Wasserkanäle 40 geändertwerden. Statt der bereits im Rahmen der Figur 8 beschriebenen U-förmigen Umlenkbleche 55 kann man die Trennung der wasserdurchströmten Ebenen voneinander auch erreichen, indem die bereits gemäß Figur 6 und 7 beschriebenen Wandungen 42 der Wasserkanäle 40 mit Einprägungen 61 versehen werden. Diese Einprägungen 61 liegen einander paarweise derart einander gegenüber, daß sich derselbe Effekt ergibt, wie wenn zwischen die Wandungen 42 ein gesondertes U-förmiges Blech 55 nach Figur 8 eingeschoben werden würde. Eine Wasserdichtigkeit der Verbindungsstellen ist nicht erforderlich.

Die Ausführungsformen des Wärmetauschers 17 nach den Figuren 6 bis 11 haben gegenüber dem aus Rohrbündeln 12 bestehenden Wärmetauschern nach den Figuren 2 bis 5 den Vorteil, daß eine Vielzahl von Schweißnähten entfallen kann. Im Hinblick auf die Gefahr einer thermischen Überbeanspruchung solcher Schweißnähte im Bereich des Brennkammerbodens 10 kann dies wesentlich sein.

Auch wenn der Wärmetauscher 17 nach den Ausführungsformen der Figuren 6 bis 11 ausgebildet ist, kann der Brennkammerboden 10 dachförmig mit einem First 11 ausgebildet sein, wobei die oberste Platte 20 - wie nach Figur 1 - eine zentrale Ausnehmung 25 aufweist, so daß der oberste Bereich des Wärmetauschers 17 im Gegenstrom betrieben wird. Diese zentrale Ausnehmung 25 befindet sich mit der Brennerachse 56 fluchtend unmittelbar unterhalb des Firstes 11.

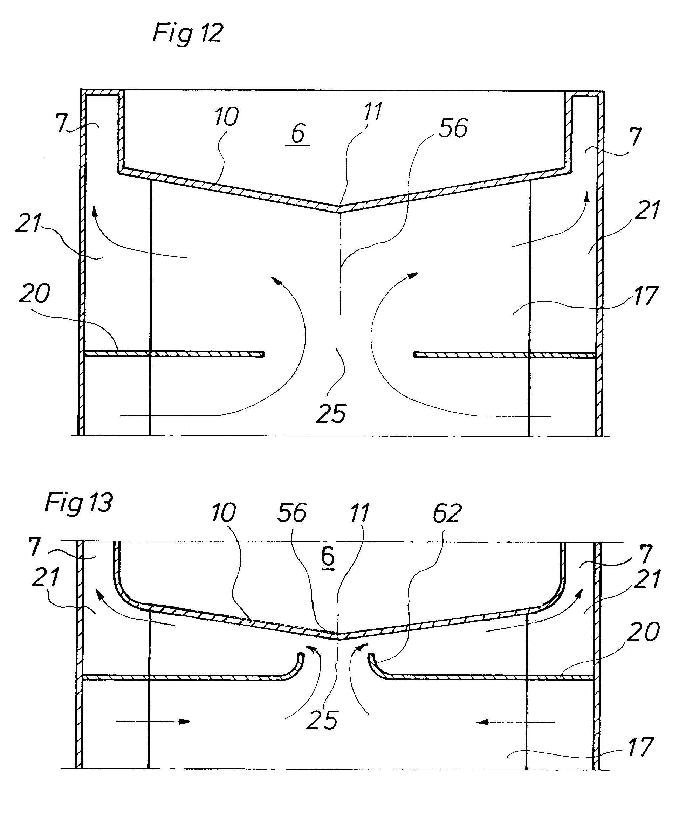

Wird der Wärmetauscher 17 gemäß Figur 8 aufgebaut, das heißt, werden die Innenbereiche der Platten 20 durch die U-förmig profilierten Umlenkbleche 55 ersetzt, dann weist gemäß Figur 12 das in einem Wasserraum zuoberst liegende Umlenkblech 55 in seinem Mittenbereich die Ausnehmung 25 auf. Weil die Wasserräume hier kanalisiert sind, strömt das Wasser aus jedem obersten Wasserraum seitwärts ab, und zwar in der ansteigenden Richtung des Firstes 11.

Gemäß Figur 13 ist die Ausnehmung 25 in dem obersten, dem Brennkammerboden 10 unmittelbar benachbarten Umlenkblech 55 mit einem düsenartigen Auslaß 62 ausgebildet, wodurch die Wasserströmung intensiv an die Unterseite des Brennkammerbodens angelegt wird.

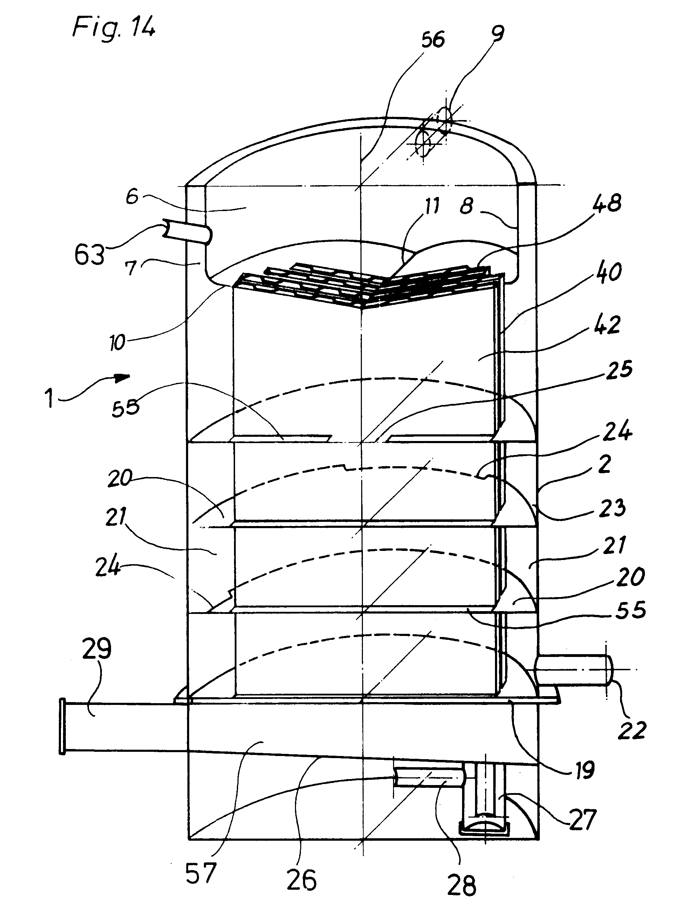

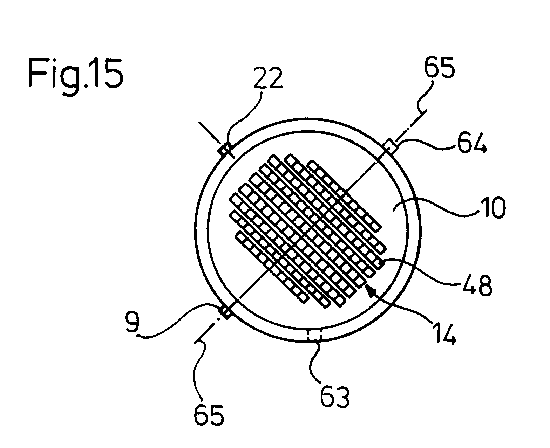

Bei der Ausführungsform des Kessels 1 nach den Figuren 14 und 15 befinden sich der Siphon 27 und der Ablaufstutzen 28 für das Kondensat innerhalb des Mantels 2 und der Abgasabzug 29 schließt im Bereich der höchsten Stelle des Sammelbleches 26 an den Abgassammler 57 an.

Die Brennkammerwandung 8 ist gemeinsam mit dem Brennkammerboden 10 als Tiefziehteil mit abgerundeter Kante ausgebildet, wodurch dieser thermisch hochbeanspruchte Bereich frei von Schweißnähten bleibt.

Die Abgaskanäle 48 sind in zueinander parallelen Scharen 14 ungleicher Länge angeordnet, und zwar sind ihre Längen zielführend derart ungleich bemessen, daß die Enden der Scharen 14 durchwegs etwa den gleichen Abstand von der kreisförmigen Peripherie des Brennerkammerbodens 10 aufweisen, so daß der periphere Bereich im wesentlichen gleichmäßig beansprucht wird.

Ferner ist bei dieser Ausführungsform ein die Wandung 8 und den Mantel 2 durchsetzendes Sichtfenster 63 zur Kontrolle der Brennkammer 6 vorgesehen. Die Achse dieses Sichtfensters 63 weist eine geringe Schrägneigung gegen den Brennkammerboden 10 auf.

Wie insbesondere die Figur 15 zeigt, ist der von dem die Brennkammer 6 ummantelnden Ringraum 7 ausgehende Vorlaufanschluf 9 einer Umlaufheizung einem Versorgungsanschluß 64 eines Speichers diametral gegenüberliegend angeordnet. Diese beiden Anschlüsse 9 und 64 sind in einer gemeinsamen, zu den parallelen Scharen 14 der Abgaskanäle 48 senkrecht verlaufenden Vertikalebene 65 angeordnet. Der in den untersten Wasserkanal 40 mündende Rücklaufanschluß 22 verläuft senkrecht zur Ebene 65 der beiden Anschlüsse 9 und 64.

Verzeichnis der Bezugsziffern:

| | |
|---|---|
| 1 | Kessel |
| 2 | Mantel |
| 3 | Boden |
| 4 | Decke |
| 5 | Sturzgebläse-Brenner |
| 6 | Brennkammer |
| 7 | wasserführender Ringraum |
| 8 | Innenwandung der Brennkammer |
| 9 | Vorlaufanschluß an 7 |
| 10 | Brennkammerboden |
| 11 | First von 10 |
| 12 | Rohrbündel aus Rohren 13 |
| 13 | Vierkant-Rohre |
| 14 | Rohrscharen der Rohre 13 |
| 15 | Zwischenäume zwischen 14 |
| 16 | Peripherie von 12 |
| 17 | Wärmetauscher |
| 18 | Schweißnaht von 17 an 10 |
| 19 | Abschlußtoden von 17 |
| 20 | Platten |
| 21 | Wasserkanäle |
| 22 | Rücklaufanschluß |
| 23 | Peripherie von 20 |
| 24 | Bereiche von 20 |
| 25 | zentrale Ausnehmung von 20 (55) |
| 26 | Sammelblech |
| 27 | Siphon |
| 28 | Kondensat-Ablaufstutzen |
| 29 | Abgasabzug |
| 30 | Abschirmtlech |
| 31 | oberer Wärmetauscherbereich |
| 32 | unterer Wärmetauscherbereich |
| 33 | zwischenraum zw. 31 und 32 |
| 34 | Oberboden |
| 35 | Unterboden |
| 36 | Abgasführung |
| 37 | Wasserstutzen zw. 31 und 32 |
| 38 | Trennwand zu 14 |
| 39 | 0 |
| 40 | Wasserkanäle in 17 |
| 41 | Pfeile Wasserströmung |
| 42 | Wandungen von 40 |
| 43 - 46 | Kanten von 42 |
| 47 | Schweißnaht von 42 |
| 48 | Abgaskanäle |
| 49 | Flansche von 42 |
| 50 | Kanten von 49 |
| 51 | Pfeile Abgasströmung |
| 52 | Blech mit Wellenprofil |
| 53 | Flächenbereiche von 52 |
| 54 | Flächenbereiche |
| 55 | Umlenkbleche in 40 |
| 56 | Brennerachse |
| 57 | Abgassammler |
| 58 | gegengleiche Bleche in 48 |
| 59 | Blech in 48 |
| 60 | Abstandhalter in 48 |
| 61 | gegeneinanderweisende Einprägungen von 42 |
| 62 | düsenartige Öffnung von 20 bzw. 55 |
| 63 | Sichtfenster durch 7 |
| 64 | Vorlaufanschluß für Speicher (Fig.15)# |
| 65 | Vertikalebene durch 9 und 64 |

**Patentansprüche**

1. Stahlheizkessel mit einem in einer Brennkammer (6) angeordneten Sturzbrenner (5) sowie einem darunter angeordneten heizwasserdurchströmten, mit einem Vorlaufanschluß (9) im oberen Bereich und einem Rücklaufanschluß (22) im unteren Bereich versehenen Wärmetauscher (17), der von etwa senkrechten Abgaskanälen (13 beziehungsweise 48) sowie in verschiedenen Ebenen übereinander verlaufenden, durch Platten (20) voneinander getrennten nahezu waagerechten Wasserkanälen (21 beziehungsweise 40) derart durchzogen ist, daß er im wesentlichen als Kreuzgegenströmer ausgebildet ist, wobei die Strömungsrichtung des Wassers in den waagerechten Wasserkanälen (21 beziehungsweise 40) je Ebene wechselt und der Brennkammerboden (10) den Abschluß des Wärmetauschers nach oben bildet, dadurch gekennzeichnet, daß die oberste dem Brennkammerboden (10) benachbarte Platte eine Ausnehmung in der Brennerachse (56) aufweist, während die anderen Platten an ihrer Peripherie (23) jeweils zwei einander diametral gegenüberliegende, den Wasserdurchlaß zwischen benachbarten Wasserkanälen (21 beziehungsweise 40) bildende, vertikal zueinander versetzte Bereiche (24) aufweisen, und daß der Brennkammerboden (10) dachförmig ausgebildet ist, wobei der Dachwinkel mindestens 6° beträgt und die Dachkante (11) die Brennerachse (56) schneidet und die niedrigste Stelle bildet.

2. Stahlheizkessel nach Patentanspruch 1, dadurch gekennzeichnet, daß der Abgasweg des Wärmetauschers (17) von Vierkant-Rohren (13), insbesondere mit Quadratquerschnitt, gebildet ist.

3. Stahlheizkessel nach Patentanspruch 2, dadurch gekennzeichnet, daß die Vierkant-Rohre (13) unmittelbar aneinandergeschweißt sind.

4. Stahlheizkessel nach Patentanspruch 3, dadurch gekennzeichnet, daß die Vierkant-Rohre (13) nur an ihren Enden aneinandergeschweißt sind.

5. Stahlheizkessel nach Patentanspruch 4, dadurch gekennzeichnet, daß die Enden der Vierkant-Rohre (13) im Bereich des Brennkammerbodens (10) und im Bereich des unteren Abschlußbodens (19) des Wärmetauschers (17) an dessen Peripherie (16) sowohl mit diesen Böden (10, 19) als auch untereinander verschweißt sind.

6. Stahlheizkessel nach Patentanspruch 5, dadurch gekennzeichnet, daß die Vierkant-Rohre (13) im übrigen Bereich lediglich aneinandergepreßt sind.

7. Stahlheizkessel nach einem der vorangehenden Patentansprüche, dadurch gekennzeichnet, daß die Platten (20) lediglich mit der Peripherie des Rohrbündels (12) verschweißt sind.

8. Stahlheizkessel nach Patentanspruch 7, dadurch gekennzeichnet, daß der Wärmetauscher (17) in einem mittleren Höhenbereich einen Zwischenraum (33) bildet, an den alle den Abgasweg bildenden Vierkant-Rohre (13) angeschlossen sind, und daß dieser Zwischenraum (33) von einem wasserführenden Stutzen (37) durchsetzt ist.

9. Stahlheizkessel nach einem der vorangehenden Patentansprüche, dadurch gekennzeichnet, daß in die Abgaskanäle (48) Bleche (52) eingesetzt sind, die eine rechteckförmig oder trapezförmig profilierte Wellung aufweisen, wobei zueinander parallele Flächenbereiche (53, 54) dieser Wellungen mit den einander gegenüberliegenden Außenseiten benachbarte Wasserkanäle (40) begrenzender Bleche (42) verschweißt sind.

10. Stahlheizkessel nach Patentanspruch 9, dadurch gekennzeichnet, daß in den Abgaskanal (48) zwei in bezug zu dessen Mittelebene gegengleich profilierte Bleche (58) eingesetzt sind und jedes dieser Bleche (58) an einer Seite der Wellung mit dem zugeordneten, einen Wasserkanal (40) begrenzenden Blech (42) verschweißt ist, wogegen die einander zugewendeten Seiten dieser Bleche (58) lose aneinanderliegend die Bleche (58) voneinander distanzieren.

11. Stahlheizkessel nach einem der Patentansprüche 1, 9 oder 10, dadurch gekennzeichnet, daß in die Wasserkanäle (40) U-förmig profilierte Umlenkbleche (55) eingefügt sind, die als Umlenkungen für den Wasserstrom dienen.

12. Stahlheizkessel nach einem der Patentansprüche 1, 9 oder 10, dadurch gekennzeichnet, daß die die Wasserkanäle (40) begrenzenden Bleche (42) mit gegeneinanderweisenden Einprägungen (61) versehen sind, die nach dem Abkanten der Bleche (42) einander gegenüberliegend als Umlenkungen für den Wasserstrom dienen.

13. Stahlheizkessel nach einem der vorangehenden Patentansprüche, dadurch gekennzeichnet, daß die Abgaskanäle (48), abgestuft in zueinander parallelen Scharen (14) ungleicher Länge, derart angeordnet sind, daß die Enden dieser Scharen (14) durchweg den etwa gleichen Abstand von der Kreisperipherie des Brennkammerbodens (10) aufweisen.

14. Stahlheizkessel nach einem der vorangehenden Patentansprüche, gekennzeichnet durch ein die Wandung (8) der Brennkammer (6), vorzugsweise mit einer gegen den Brennkammerboden (10) gerichteten Neigung, durchsetzendes Sichtfenster (63).

15. Stahlheizkessel nach einem der vorangehenden Patentansprüche, dadurch gekennzeichnet, daß der von dem die Brennkammer (6) ummantelnden wasserführenden Ringraum (7) ausgehende Vorlaufanschluß (9) einer Umlaufheizung einem Versorgungsanschluß (64) eines Speichers diametral gegenüberliegt.

16. Stahlheizkessel nach Patentanspruch 15, dadurch gekennzeichnet, daß die beiden Anschlüsse (9 und 64) in einer gemeinsamen vertikalen Ebene (65) senkrecht zu den zueinander parallelen Scharen (12) der Abgaskanäle (48) gerichtet sind.

17. Stahlheizkessel nach Patentanspruch 16, dadurch gekennzeichnet, daß der in den untersten Wasserkanal (21 beziehungsweise 40) mündende Rücklaufanschluß (22) der Umlaufheizung zur gemeinsamen Ebene (65) der beiden Anschlüsse (9 und 64) senkrecht verläuft.

## Claims

1. A heating boiler made of steel and comprising a downdraught burner (5), which is disposed in a combustion chamber (6), and a heat exchanger (17), which is disposed underneath and is provided in its upper portion with a flow port (9) and in its lower portion with a return port (22) and is flown through by heating water; and approximately vertical flue passages (13 or 48) and almost horizontal water passages (21 or 40), which are arranged one over the other in different planes and are separated from each other by plates (20), extend through the heat exchanger (17) and are so arranged that the heat exchanger substantially constitutes a cross-counterflow heat exchanger, wherein the direction of flow of the water in the horizontal water passages (21 or 40) is different in different planes and the bottom (1) of the combustion chamber (10) constitutes the top of the heat exchanger, characterized in that the uppermost plate adjacent to the bottom (10) of the combustion chamber has an aperture in the burner axis (56) and each of the other plates has in its periphery (23) two diametrically opposite, vertically offset portions (24), which permit water to flow between adjacent water passages (21 or 40), the bottom (10) of the combustion chamber is roof-shaped and has an angle of roof pitch of at least 6° and the roof edge (1) intersects the axis (56) of the burner and is the lowermost portion.

2. A heating boiler made of steel according to claim 1, characterized in that the flue gas path of the heat exchanger (17) is constituted by rectangular-section tubes (13), which are particularly square in cross-section.

3. A heating boiler made of steel according to claim 2, characterized in that the rectangular-section tubes (13) are directly welded to each other.

4. A heating boiler made of steel according to claim 3, characterized in that the rectangular-section tubes (13) are welded to each other only at their ends.

5. A heating boiler made of steel according to claim 4, characterized in that adjacent to the bottom (10) of the combustion chamber and adjacent to the bottom (19) of the heat exchanger (17) the ends of the rectangular-section tubes (13) are welded to said bottoms (10,19) and to each other at the periphery (16) of the heat exchanger (13).

6. A heating boiler made of steel according to claim 5, characterized in that the rectangular-section tubes (13) are merely pressed against each other in the remaining region.

7. A heating boiler made of steel according to any of the preceding claims, characterized in that the plates (20) are welded merely to the periphery of the tube bundle (12).

8. A heating boiler wade of steel according to claim 1, characterized in that the heat exchanger (17) defines in an intermediate part of its height an intermediate space (55), to which all rectangular-section tubes (13) which constitute the flue gas path are connected, and that a water-conducting pipe (37) extends through said intermediate space (33).

9. A heating boiler made of steel according to any of the preceding claims, characterized in that sheet metal elements (52) are inserted in the flue gas passages (48) and have a rectangular of trapezoidal corrugations and parallel surface portions (53, 54) of said corrugations are welded to the mutually opposite outside surfaces of sheet metal elements (42) which define adjacent water passages (40).

10. A heating boiler made of steel according to claim 9, characterized in that the flue gas passage (48) contains two inserted sheet metal elements (58), which have sectional shapes which are equal and opposite with reference to the center plane of said flue passage, each of said sheet metal elements (58) is welded on one side of the corrugations to the associated sheet metal element (42) which defines a water passage (40) and the confronting sides of the sheet metal elements (58) are in loose contact with each other and space the sheet metal elements (58) apart.

11. A heating boiler made of steel according to any of claims 1, 3 or 10, characterized in that channel-shaped deflecting sheet metal elements (55) are fitted in the water passages (40) and serve to deflect the water stream.

12. A heating boiler made of steel according to any of claims 1, 3, or 10, characterized in that the sheet metal elements (12) which define the water passages (40) are formed with impressions (61), which face each other and which when the sheet metal elements (42) have been folded are disposed opposite to each other and serve to deflect the water stream.

13. A heating boiler made of steel according to any of the preceding claims, characterized in that the flue gas passages (48) are stepped and arranged in parallel sets (14) having different, lengths and in such a manner that all ends of said sets (14) are spaced approximately the same distance from the periphery of the circular bottom (10) of the combustion chamber.

14. A heating boiler made of steel according to any of the preceding claims, characterized by an inspection window (63), which extends through the wall (8) of the combustion chamber (6), preferably with an inclination towards the bottom (10) of the combustion chamber.

15. A heating boiler made of steel according to any of the preceding claims, characterized in that the flow port (9) of a circulating heating system extends from the water-conducting annular space (7) which surrounds the combustion chamber (6) and said flow port (9) is disposed opposite to a port (64) for feeding an accumulator.

16. A heating boiler made of steel according to claim 15, characterized in that the two ports (9 and 64) extend in a common vertical plane (65) at right angles to the mutually parallel sets (12) of the flue gas passages (48).

17. A heating boiler made of steel according to claim 16, characterized in that the return port (22) of the circulating heating system opens into the lowermost passage (21 or 40) and is at right angles to the common plane (65) of the two ports (9 and 64).

**Revendications**

1. Chaudière en acier avec un brûleur inversé (5) logé dans une chambre de combustion (6), et un échangeur de chaleur (17) disposé sous ce brûleur, et où circule l'eau à chauffer, et avec un raccord de départ (9) dans sa partie supérieure et un raccord de retour (22) dans sa partie inférieure, chaudière munie intérieurement de conduits d'évacuation de fumée (13 rsp. 48) à peu près verticaux ainsi que de conduites d'eau (21 rsp. 40) à peu près horizontales disposées à des niveaux différents et séparées entre elles par des plaques (20) de sorte qu'elle constitue essentiellement une chaudière à contre-courant en croix, la direction d'écoulement de l'eau dans les conduites horizontales (21 rsp. 40) changeant d'un étage à l'autre, et le fond (10) de la chambre de combustion fermant l'échangeur de chaleur vers le haut, caractérisée par le fait que la plaque la plus proche du fond (10) de la chambre de combustion présente un évidement dans le prolongement de l'axe (56) du brûleur, tandis que les autres plaques présentent à leur périphérie (23) deux évidements (24) opposés diamétralement l'un à l'autre, assurant la communication entre des conduites d'eau horizontales (21 rsp. 40) voisines et décalés entre eux d'un étage à l'autre, et que le fond (10) de la chambre de combustion est réalisé en forme de toit inversé, l'angle de faîte s'élevant à au moins 6° et la ligne de faîte (11) coupant l'axe (56) du brûleur, constituant le point le plus bas.

2. Chaudière suivant la revendication 1, caractérisée par le fait que les conduits d'évacuation (13) de l' échangeur de chaleur (17) sont des tubes rectangulaires, notamment à section carrée.

3. Chaudière suivant la revendication 2, caractérisée par le fait que les tubes (13) sont soudés côte à côte.

4. Chaudière suivant la revendication 3, caractérisée par le fait que les tubes (13) sont soudés l'un à l' autre seulement par leurs bouts.

5. Chaudière suivant la revendication 4, caractérisée par le fait que les tubes (13) sont soudés, au niveau du fond (10) de la chambre de combustion et au niveau du fond (19) de l'échangeur de chaleur (17), soit sa périphérie (16), aussi bien à ces fonds (10, 19) que l'un contre l'autre.

6. Chaudière suivant la revendication 5, caractérisée par le fait que les tubes (13) sont seulement serrés l'un contre l'autre entre ces points de soudure.

7. Chaudière suivant l'une des revendications précédentes, caractérisée par le fait que les plaques (20) sont soudées seulement à la périphérie du faisceau de tubes (12).

8. Chaudière suivant la revendication 7, caractérisée par le fait que l'échangeur de chaleur (17) comprend à mi-hauteur un espace (33) où sont raccordés tous les tubes (13) servant à l'évacuation des gaz brûlés, et que cet espace (33) est traversé par une tubulure d'eau (37).

9. Chaudière suivant l'une des revendications précédentes, caractérisée par le fait que les conduits d'évacuation (48) sont munis de tôles (52) présentant une ondulation en forme de rectangles ou de trapèzes, des faces parallèles (53, 54) de ces ondulations étant soudées aux faces extérieures opposées des tôles (42) délimitant des conduites d'eau (40) voisines.

10. Chaudière suivant la revendication 9, caractérisée par le fait que le conduit d'évacuation (48) est muni de deux tôles (58) profilées de façon symétrique par rapport au plan médian du conduit, et que chacune de ces tôles (58) est soudée, sur un côté de l'ondulation, à la tôle (42) correspondante délimitant une conduite d'eau (40), les parties de ces tôles (58), qui se sont opposées, se touchant légèrement et établissent une certaine distance entre les tôles (58).

11. Chaudière suivant l'une des revendications 1, 9 ou 10, caractérisée par le fait que les conduites d'eau (40) comprennent des déflecteurs (55) en forme de U pour faire dévier le courant d'eau.

12. Chaudière suivant l'une des revendications 1, 9 ou 10, caractérisée par le fait que les tôles (42) délimitant les conduites d'eau (40) sont munies d'empreintes (61) qui, après le pliage des tôles (42), se sont opposées et font fonction de déflecteurs pour le courant d'eau.

13. Chaudière suivant l'une des revendications précédentes, caractérisée par le fait que les conduits d'évacuation (48) réunis par groupes (14) d'étendue variée sont disposés de sorte que les bouts de ces groupes (14) se trouvent à peu près tous à la même distance du pourtour du fond (10) de la chambre de combustion.

14. Chaudière suivant l'une des revendications précédentes, caractérisée par un voyant (63) perçant la paroi (8) de la chambre de combustion (6), et de préférence incliné en direction du fond (10) de la chambre de combustion.

15. Chaudière suivant l'une des revendications précédentes, caractérisée par le fait que le raccord (9) alimentant un chauffage à circulation et branché sur l'enveloppe (7) de la chambre de combustion (6), où circule de l'eau, est diamétralement opposé à un raccord (64) alimentant un accumulateur d'eau.

16. Chaudière suivant la revendication 15, caractérisée par le fait que les deux raccords (9 et 64) sont disposés dans un plan vertical (65) perpendiculaire aux groupes (12) parallèles des conduits d'évacuation (48).

17. Chaudière suivant la revendication 16, caractérisée par le fait que le raccord de retour (22) du chauffage à circulation, débouchant dans la conduite d'eau la plus basse (21 rsp. 40), est perpendiculaire au plan vertical (65) des deux raccords (9 et 64).

Fig. 1

Fig. 2

Fig. 3

Fig. 4

Fig. 5

Fig.6

Fig 7

Fig 8

Fig 9

Fig 10

Fig 11

*Fig 12*

*Fig 13*

Fig. 14

Fig.15